# EUROPÄISCHE PATENTSCHRIFT

(11) **EP 3 002 174 B1**
(45) Veröffentlichungstag und Bekanntmachung des Hinweises auf die Patenterteilung: **01.02.2017**
(21) Anmeldenummer: 15172605.6
(22) Anmeldetag: 17.06.2015
(51) Int. Cl.: B61L 29/28, B61L 5/18, G06F 11/07, G06F 11/30

(54) **TAKTSIGNALAUSGABEEINRICHTUNG FÜR EINEN LICHTSIGNALGEBER**
CLOCK SIGNAL OUTPUT DEVICE FOR A LIGHT SIGNAL EMITTER
DISPOSITIF D'EMISSION DE SIGNAUX DE SYNCHRONISATION POUR SIGNAUX LUMINEUX

(30) Priorität: 15.09.2014 DE 102014113226
(43) Veröffentlichungstag der Anmeldung: 06.04.2016
(73) Patentinhaber: PINTSCH BAMAG Antriebs- und Verkehrstechnik GmbH, 46537 Dinslaken (DE)
(72) Erfinder: ULMER, Helmut, 46499 Hamminkeln (DE)
(74) Vertreter: CBDL Patentanwälte

(56) Entgegenhaltungen:
- DE-A1-102007 014 398
- US-A- 5 426 776
- US-A- 5 581 455
- US-A1- 2001 032 908

## Beschreibung

### TECHNISCHES GEBIET DER ERFINDUNG

Die Erfindung betrifft eine Taktsignalausgabeeinrichtung, eine Schaltung mit einer solchen Taktsignalausgabeeinrichtung, eine Steuereinheit mit einer solchen Schaltung und einen Lichtsignalgeber, insbesondere für Bahnübergänge, mit einer solchen Schaltung.

### HINTERGRUND DER ERFINDUNG

Auf dem Gebiet der Erfindung sind Lichtsignalgeber für Bahnübergänge bekannt. Sie dienen dazu, an Bahnübergängen optische Signale zu erzeugen, die Verkehrsteilnehmer vor einem herannahenden Zug warnen. Üblicherweise sind sie so aufgebaut, dass an einem Pfosten über einem sogenannten Andreaskreuz eine gelbe und eine rote Signalleuchte angeordnet sind, wobei bei Herannahen eines Zuges zunächst die gelbe Signalleuchte eingeschaltet wird, um den Verkehrsteilnehmern Gelegenheit zu geben, den unmittelbaren Gefahrenbereich zu räumen, worauf dann nach einer gewissen Zeitspanne, z.B. 3 bis 5 Sekunden, das rote Signallicht eingeschaltet wird, um anzuzeigen, dass in den Gefahrenbereich nicht mehr eingefahren bzw. eingetreten werden darf.

Aus der EP 1 992 542 A2 ist eine Signaleinrichtung bekannt mit einer Rotlichtquelle und einer Zusatzlichtquelle, die mit einer Schaltungskomponente an einen Stromanschluss schaltbar sind, wobei die Rotlichtquelle zwei LED-Stränge aufweist und die Zusatzlichtquelle zwei LED-Stränge aufweist. Derartige Signaleinrichtungen sind mit softwarebasierter Steuerung der Lichtquellen bekannt.

Aus der englischen Produktschrift "The new LED3 Signal Head", herausgegeben von der Siemens AG, Bestellnummer E10003-A800-W18-X-7600, Ausgabe 004, 2003-12-03, und aus der englischen Produktschrift zum Steuergerät "SITRAFFIC C800V: Precision and reliability at its best", herausgegeben von der Siemens AG, Bestellnummer E10003-A800-W16-X-7600, Ausgabe 002, 2002-03-01, sind Lichtsignalanlagen mit jeweils einer Steuerung über ein Prozessorsystem und mit jeweils einer Schnittstelle zu einer übergeordneten Verkehrsrechner-Zentrale bekannt. Zur Erhöhung der Betriebssicherheit ist dabei eine Überwachung durch zwei unabhängige Mikroprozessoren nach VDE0832 vorgesehen, um verkehrsgefährdende Signalisierungszustände auszuschließen. Ferner ist dabei eine Überwachung auf widersprüchliche Signalisierungszustände vorgesehen. Treten solche Zustände auf, wird dies der Zentrale gemeldet.

Aus der DE 10 2007 014 398 A1 ist eine Taktsignalausgabeeinrichtung zur Ausgabe eines Ausgabetaktsignals in Abhängigkeit von einem Empfangstaktsignal und in Abhängigkeit von wenigstens zwei mit Gegentakt zueinander empfangenen Eingangssignalen bekannt, die eine Signalverarbeitungseinheit, die eine Ladungspumpe, welche eine Stromrichtereinheit aufweist, mit einem elektronischen Auskopplungsschalter, der mit einer Basis zum Empfang eines Taktsignals eingerichtet ist, und einer Taktsignalausgabeeinheit mit einem Taktsignalausgang.

Bei Anlagen mit einem oder zwei Mikroprozessor/en oder Microcontroller/n können Statusmeldungen über Funktionsprüfungen des oder der Mikroprozessors/- prozessoren bzw. Microcontrollers/-controllern vorgesehen werden. Zur Gewährleistung der Betriebssicherheit ist es dabei entscheidend, dass Statusmeldungen, die eine intakte Funktion des oder der Mikroprozessors/- prozessoren bzw. Microcontrollers/-controllern anzeigen, nicht bei fehlerhaften Signalausgaben des oder der Mikroprozessors/-prozessoren bzw. Microcontrollers/-controllern erfolgen können. Dabei sind geringe Komplexität und Kosten, insbesondere bei der Systemwartung gewünscht.

### OFFENBARUNG DER ERFINDUNG

Der Erfindung liegt die Aufgabe zugrunde, die Sicherheit von Steuerungen, insbesondere für Lichtsignalgeber für Bahnübergänge, zu verbessern. Zur Lösung dieser Aufgabe ist eine Taktsignalausgabeeinrichtung nach Anspruch 1 vorgesehen.

Die Stromrichteinheit der Ladungspumpe kann zwei in Reihe geschaltete Dioden aufweisen, wobei der Kondensator der Ladungspumpe mit einem Ende zwischen diese beiden Dioden geschaltet und mit einem weiteren Ende an die Umschalteinrichtung angeschlossen ist. Die Stromrichteinheit ist zwischen einen weiteren Spannungseingangspol und den Auskopplungsschalter zum Aufbau mit dem Kondensator von einer Überwachungsspannung zwischen der Stromrichteinheit und dem Spannungseingangsgegenpol geschaltet. Die genannten Pole sind insbesondere als Gleichstrompole vorgesehen.

Die Überwachungsspannung hat ein Vorzeichen, das dem Vorzeichen einer zwischen dem Spannungseingangs- bzw. dem weiteren Spannungseingangs- und Spannungseingangsgegenpol vorgesehenen Spannung entgegengesetzt ist. An dem Spannungseingangspol ist ein höherer Spannungswert, z.B. +10 bis +24 Volt, insbesondere +12 Volt, als an dem weiteren Spannungseingangspol vorgesehen, für den z.B. +3 bis +9 Volt, insbesondere +5 Volt vorgesehen sind. Für den Spannungseingangsgegenpol kann ein Bezugsspannungswert von 0 Volt vorgesehen sein.

Eine Taktsignalausgabeeinheit der Taktsignalausgabeeinrichtung umfasst den elektronischen Taktsignalschalter, der mit seiner Basis an die Signalverarbeitungseinheit gekoppelt ist. Dabei dient für diese Kopplung vorteilhaft ein Kopplungskondensator, der zwischen dem Auskopplungsschalter und der Basis des Taktsignalschalters vorgesehen ist, wobei der Auskopplungsschalter eine Funktion zum Anschluss des Kopplungskondensators an den Spannungseingangsgegenpol aufweist. Zwischen dem Spannungseingangsgegenpol und der Basis des Taktsignalschalters kann eine Diode vorgesehen sein.

Die Umschalteinrichtung kann aufgebaut sein mit:
- einem ersten Transistorschalter, der als Schalter zwischen den Spannungseingangsgegenpol und den Kondensator der Ladungspumpe geschaltet ist, und dessen Gatter eine Verbindung zu einem der Signaleingänge und zu dem Spannungseingangsgegenpol aufweist,
- einem zweiten Transistorschalter, der als Schalter zwischen den Spannungseingangspol und den Kondensator der Ladungspumpe geschaltet ist, und dessen Gatter eine Verbindung zu dem Spannungseingangspol aufweist, und
- einem dritten Transistorschalter, der als Schalter zwischen den Spannungseingangsgegenpol und das Gatter des zweiten Transistorschalters geschaltet ist, und dessen Gatter eine Verbindung zu einem weiteren der Signaleingänge und zu dem Spannungseingangsgegenpol aufweist.

In der Signalverarbeitungseinheit kann ein zwischen Ermittler und Kollektor des Auskopplungsschalters geschalteter Glättungskondensator vorgesehen sein.

Wie beschrieben ist bei einer Ausführung der Taktsignalausgabeeinrichtung ein Kopplungskondensator zwischen dem Auskopplungsschalter und der Basis des Taktsignalschalters vorgesehen, wobei eine Funktion des Auskopplungsschalters zum Anschluss des Kopplungskondensators an den Spannungseingangsgegenpol eingerichtet ist. Vorteilhaft ist dann die Signalverarbeitungseinheit zweifach vorgesehen. Dabei ist der Kopplungskondensator an dem Auskopplungsschalter von einer ersten der Signalverarbeitungseinheiten vorgesehen und ein weiterer Kopplungskondensator vorgesehen, der mit einem Ende über den Auskopplungsschalter von einer zweiten der Signalverarbeitungseinheiten an den Spannungseingangsgegenpol anschließbar ist. Mit einem weiteren Ende ist der weitere Kopplungskondensator an die Basis des Auskopplungsschalters der ersten Signalverarbeitungseinheit angeschlossen.

Zur Erzeugung des Empfangstaktsignals kann eine Taktgeneratoreinheit eingesetzt werden und zur Abgabe des Empfangstaktsignals an die Basis des Auskopplungsschalters mit der Signalverarbeitungseinheit verbunden sein. Eine entsprechende Schaltung mit der Taktgeneratoreinheit und der erfindungsgemäßen Taktsignalausgabeeinrichtung ist auch Gegenstand der Erfindung.

Bei einer erfindungsgemäßen Taktsignalausgabeeinrichtung mit einer Signalverarbeitungseinheit kann die Taktgeneratoreinheit zur Erzeugung des Empfangstaktsignals zur Abgabe des Empfangstaktsignals an die Basis des Auskopplungsschalters mit der Signalverarbeitungseinheit verbunden sein.

Bei einer erfindungsgemäßen Taktsignalausgabeeinrichtung mit zwei Signalverarbeitungseinheiten (d.h. mit zweifacher Signalverarbeitungseinheit bzw. erster und zweiter Signalverarbeitungseinheit) kann Taktgeneratoreinheit zur Erzeugung des Empfangstaktsignals zur Abgabe des Empfangstaktsignals an die Basis des Auskopplungsschalters mit der zweiten Signalverarbeitungseinheit verbunden sein.

Die Taktgeneratoreinheit kann weiter zur Abgabe von einem zu dem Empfangstaktsignal invers getakteten Signals an den Spannungseingangsgegenpol eingerichtet und geschaltet sein. Dazu kann sie einen zur Abgabe von dem Empfangstaktsignal und dem zu dem Empfangstaktsignal invers getakteten Signal geschalteten Oszillator zwischen zwei Oszillator-Kopplungskondensatoren aufweisen. Der Oszillator kann ein Schmitt-Trigger, insbesondere ein invertierender Schmitt-Trigger sein, der insbesondere mit seinem Spannungseingang und Spannungsausgang zwischen die Oszillator-Kopplungskondensatoren geschaltet sein kann.

Die Erfindung findet vorteilhafte Anwendung insbesondere bei einer Steuereinheit, insbesondere für Lichtsignalgeber für Bahnübergänge. Dabei kann die erfindungsgemäße Schaltung mit wenigstens einem Microcontroller und einer Statusmeldungseinheit verwendet werden, wobei
- von der Signalverarbeitungseinheit bzw. den Signalverarbeitungseinheiten die Signaleingänge an den wenigstens einen Microcontroller angeschlossen sind und
- die Statusmeldungseinheit an den Taktsignalausgang angeschlossen ist und eine Funktion zur Ausgabe von Meldungen über einen Microcontrollerstatus mittels des Ausgabetaktsignals aufweist.

Weitere Einzelheiten und Vorteile der Erfindung ergeben sich aus der nachfolgenden rein beispielhaften und nicht-beschränkenden Beschreibung eines Ausführungsbeispiels in Verbindung mit der Zeichnung.

### KURZE BESCHREIBUNG DER ZEICHNUNG

- Fig. 1: zeigt schematisch eine Schaltung der Erfindung.
- Fig. 2: zeigt spezielle Details einer Schaltung nach Fig. 1.
- Fig. 3: zeigt eine Variante der in Fig. 1 gezeigten Schaltung mit einer weiteren Signalverarbeitungseinheit und einem weiteren Kopplungskondensator.
- Fig. 4: zeigt spezielle Details einer Schaltung nach Fig. 3.

### BESCHREIBUNG BEVORZUGTER AUSFÜHRUNGSFORMEN

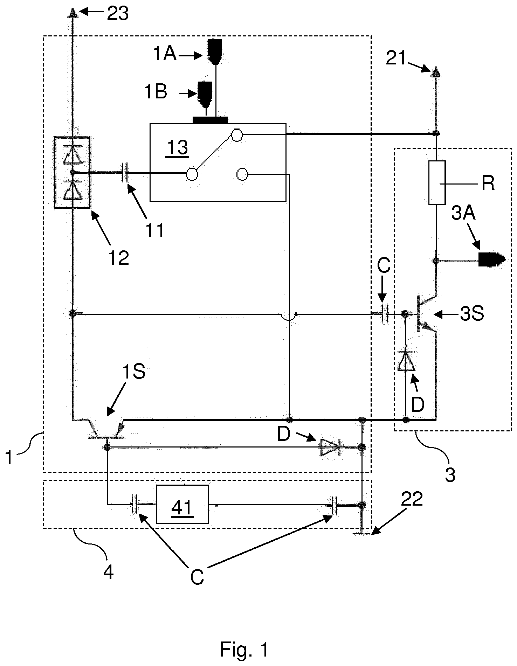

Die erfindungsgemäße Taktsignalausgabeeinrichtung dient zur Ausgabe eines Ausgabetaktsignals in Abhängigkeit von einem Empfangstaktsignal und von in Abhängigkeit von wenigstens zwei mit Gegentakt zueinander empfangenen Eingangssignalen. Wie aus den in den Figuren 1 bis 4 gezeigten Schaltungen ersichtlich, umfasst eine solche Taktsignalausgabeeinrichtung eine Signalverarbeitungseinheit 1 und eine Taktsignalausgabeeinheit 3.

Die Signalverarbeitungseinheit 1 umfasst eine Ladungspumpe, welche einen Kondensator 11 und eine Stromrichteinheit 12 aufweist, einen elektronischen Auskopplungsschalter 1 S mit einer Basis zum Empfang des Empfangstaktsignals und eine Umschalteinrichtung 13, die mit zwei Signaleingängen 1A, 1 B für die Eingangssignale zum Schalten des Kondensators 11 in Abhängigkeit der Eingangssignale zwischen der Stromrichteinheit 12 und entweder einem Spannungseingangspol 21 oder einem Spannungseingangsgegenpol 22 eingerichtet ist. Die Stromrichteinheit 12 ist zwischen einen weiteren Spannungseingangspol 23 und den Auskopplungsschalter 1 S geschaltet, um mit dem Kondensator 11 eine Überwachungsspannung zwischen der Stromrichteinheit 12 und dem Spannungseingangsgegenpol 22 aufzubauen. An dem Spannungseingangspol ist bei diesem Ausführungsbeispiel ein Spannungswert von +12 Volt, an dem weiteren Spannungseingangspol 23 ein Spannungswert von +5 Volt und an dem Spannungseingangsgegenpol 22 ein Spannungswert von 0 Volt vorgesehen.

Bei der Ladungspumpe weist die Stromrichteinheit 12 zwei in Reihe geschaltete Dioden auf, wobei der Kondensator 11 der Ladungspumpe mit einem Ende zwischen diese beiden Dioden geschaltet und mit einem weiteren Ende an die Umschalteinrichtung 13 angeschlossen ist.

Die Signalverarbeitungseinheit 1 umfasst eine Diode D zwischen der Basis des Auskopplungsschalters 1S und dem Spannungseingangsgegenpol 22. Eine Diode D der Taktsignalausgabeeinheit 3 ist zwischen der Basis des Taktsignalschalters 3S und dem Spannungseingangsgegenpol 22 vorgesehen. Die Signalverarbeitungseinheit 1 umfasst auch einen zwischen Emitter und Kollektor des Auskopplungsschalters 1 S geschalteten Glättungskondensator 14.

Die Umschalteinrichtung 13 umfasst:
- einen ersten Transistorschalter S1, der als Schalter zwischen den Spannungseingangsgegenpol 22 und den Kondensator 11 der Ladungspumpe geschaltet ist und dessen Basis eine Verbindung zu einem der Signaleingänge 1 B und zu dem Spannungseingangsgegenpol 22 aufweist,
- einen zweiten Transistorschalter S2, der als Schalter zwischen den Spannungseingangspol 21 und den Kondensator 11 der Ladungspumpe geschaltet ist und dessen Basis eine Verbindung zu dem Spannungseingangspol 21 aufweist, und
- einen dritten Transistorschalter S3, der als Schalter zwischen den Spannungseingangsgegenpol 22 und die Basis des zweiten Transistorschalters S2 geschaltet ist und dessen Basis eine Verbindung zu einem weiteren der Signaleingänge 3A und zu dem Spannungseingangsgegenpol 22 aufweist.

Eine Taktsignalausgabeeinheit 3 ist mit einem Taktsignalausgang 3A an dem Spannungseingangspol 21 und einem zur Unterbrechung einer Verbindung des Spannungseingangspols 21 und des Taktsignalausgangs 3A zu dem Spannungseingangsgegenpol 22 vorgesehenen elektronischen Taktsignalschalter 3S versehen, der mit seiner Basis an die Signalverarbeitungseinheit 1 gekoppelt ist. Die Überwachungsspannung hat ein negatives Vorzeichen. Bei der Taktsignalausgabeeinheit 3 ist eine Diode D zwischen dem Spannungseingangsgegenpol 22 und der Basis des Taktsignalschalters 3S vorgesehen.

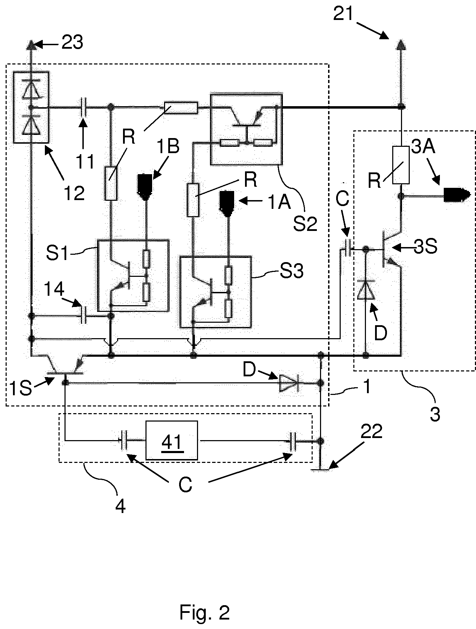

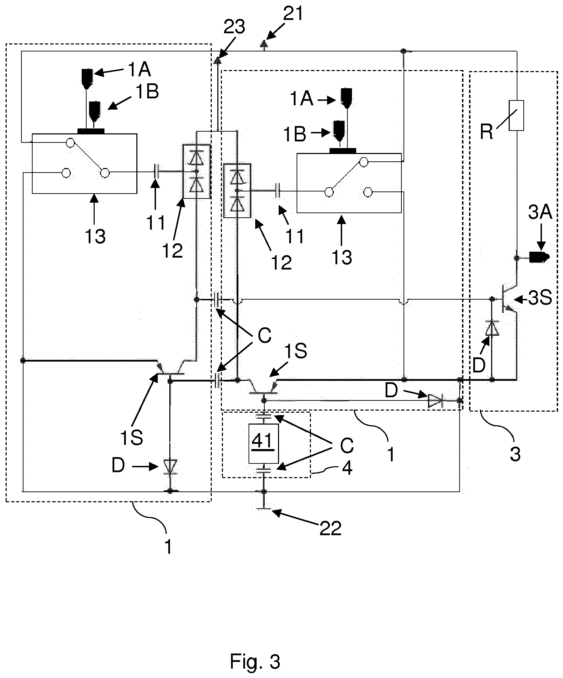

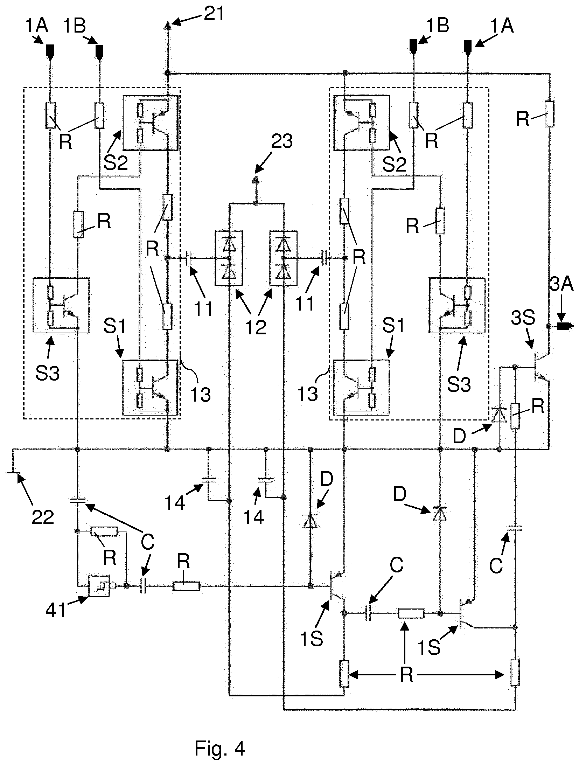

Wie in den Figuren 1 und 2 gezeigt ist ein Kopplungskondensator C zwischen dem Auskopplungsschalter 1 S und der Basis des Taktsignalschalters 3S vorgesehen, wobei der Auskopplungsschalter 1S eine Funktion zum Anschluss des Kopplungskondensators C an den Spannungseingangsgegenpol 22 aufweist. Bei den in den Figuren 3 und 4 gezeigten Ausführungen ist dieser Kopplungskondensator C für die Kopplung unter der Basis des Taktsignalschalters 3S und einer der beiden Signalverarbeitungseinheiten 1 vorgesehen.

Wie in den Figuren 1 und 2 gezeigt, ist eine Taktgeneratoreinheit 4 zur Erzeugung des Empfangstaktsignals zur Abgabe des Empfangstaktsignals an die Basis des Auskopplungsschalters 1 S mit der Signalverarbeitungseinheit 1 verbunden, während diese bei den in den Figuren 3 und 4 gezeigten Ausführungen nur mit der Basis des Auskopplungsschalters 1S mit von einer der Signalverarbeitungseinheiten 1 verbunden ist. Somit ist dann
- die Signalverarbeitungseinheit 1 doppelt vorgesehen,
- der Kopplungskondensator C an dem Auskopplungsschalter 1 S von einer ersten der Signalverarbeitungseinheiten vorgesehen und
- ein weiterer Kopplungskondensator C vorgesehen, der mit einem Ende über den Auskopplungsschalter 1 S von einer zweiten der Signalverarbeitungseinheiten an den Spannungseingangsgegenpol 22 anschließbar ist und mit einem weiteren Ende an die Basis des Auskopplungsschalters 1 S der ersten Signalverarbeitungseinheit angeschlossen ist. Bei den in den Figuren 3 und 4 gezeigten Ausführungen umfasst somit die Taktsignalausgabeeinrichtung eine weitere Signalverarbeitungseinheit, wobei die beiden Signalverarbeitungseinheiten 1 identisch aufgebaut sind.

Wie in den Figuren 1 bis 4 gezeigt, ist die Taktgeneratoreinheit 4 weiter zur Abgabe von einem zu dem Empfangstaktsignal invers getakteten Signal an den Spannungseingangsgegenpol 22 eingerichtet und geschaltet und weist einen zwischen zwei Oszillator-Kopplungskondensatoren C zur Abgabe von dem Empfangstaktsignal und dem zu dem Empfangstaktsignal invers getakteten Signal geschalteten Schmitt-Trigger 41 auf. Zwischen dem Spannungseingangspol 21 und dem Taktsignalschalter 3S ist ein Widerstand R vorgesehen.

Wie in Fig. 4 veranschaulicht, sind Widerstände R jeweils vorgesehen:
- an den Signaleingängen 1A, 1 B,
- zwischen der Stromrichteinheit 12 und dem Auskopplungsschalter 1S,
- zwischen den Kopplungskondensatoren C und der mit ihnen verbundenen Basis des Taktsignalschalter 3S bzw. einem der Auskopplungsschalter 1S,
- zwischen dem Spannungseingangspol 21 und dem Taktsignalschalter 3S,
- auf der Verbindung zwischen der Taktgeneratoreinheit 4 und der mit ihr verbundenen Basis eines der Auskopplungsschalters 1S, und
- parallel zu dem Schmitt-Trigger 41 zwischen den Oszillator-Kopplungskondensatoren C der Taktgeneratoreinheit 4.

Wie in den Figuren 2 und 4 veranschaulicht, sind in der Umschalteinrichtung 13 auf jeder Verbindung des Kondensators 11 der Ladungspumpe zu einem der ersten und zweiten Transistorschalter S1, S2 sowie zwischen den zweiten und dritten Transistorschaltern S2, S3 Widerstände R vorgesehen.

Wie in den Figuren 2 und 4 veranschaulicht, sind die Basis der ersten bis dritten Transistorschalter S1, S2, S3 jeweils über einen Spannungsteiler angeschlossen und dabei mit einem Knoten unter zwei Widerständen des Spannungsteilers verbunden.

Die in Fig. 4 veranschaulichte Schaltung ist Teil einer Steuereinheit. Dabei ist je ein Microcontroller (nicht gezeigt) an eine der Signalverarbeitungseinheiten 1 über deren die Signaleingänge 1A, 1 B angeschlossen. Eine (hier nicht gezeigte) Statusmeldungseinheit ist an den Taktsignalausgang 3A angeschlossen und besitzt eine Funktion zur Ausgabe von Meldungen über einen Microcontrollerstatus mittels des Taktsignals. Dabei sind folgende Funktionen und Eigenschaften vorgesehen:
- Lebenszeichen in Form der Eingangssignale zeigen die Funktionsfähigkeit der Microcontroller an,
- eine Erzeugung der Lebenszeichen erfolgt durch eine Ablaufprüfung der Microcontroller, welche erkennt, ob alle Programmmodule, die ununterbrochen gesteuert sind, durchlaufen werden,
- Fehler in den Microcontrollern führen zum Anhalten des Lebenszeichentaktes bzw. Ausbleiben der Gegentaktes der Eingangssignale an der jeweiligen Signalverarbeitungseinheit 1,
- Statusmeldungen (auf Basis des Ausgabetaktsignals) sind nur generierbar wenn beide Microcontroller ordnungsgemäß arbeiten,
- ein Lebenszeichen wird an das Signaleingangspaar 1A, 1 B einer Signalverarbeitungseinheit 1 im Gegentakt (z.B. mit 2 bis 5 kHz Takt) ausgegeben und nur wenn das Lebenszeichen im Gegentakt ausgegeben wird, ist die Durchschaltung der Statusmeldungen möglich.

Beispielhaft werden nachfolgend detaillierter einige Funktionen von bestimmten in Fig. 4 gezeigten Schaltungselementen beschrieben.

### Lebenszeichen eines ersten Microcontrollers

Ein erster Microcontroller (nicht gezeigt) liefert ein Lebenszeichen und somit in einem Takt einen Signalpegel H an den links in Fig. 4 gezeigten Signaleingang 1A und schaltet damit den in Fig. 4 links gezeigten Transistorschalter S3 ein. Dadurch werden an den in Fig. 4 in der linken Bildhälfte gezeigte Kondensator 11 einer Ladungspumpe 12 Volt von dem Spannungseingang 21 angelegt.

Im nächsten Takt des Lebenszeichens liefert der erste Microcontroller einen Signalpegel H an den links in Fig. 4 gezeigten Signaleingang 1 B und schaltet damit den in Fig. 4 links gezeigten Transistorschalter S1 ein. Dadurch werden 0 Volt an den in Fig. 4 in der linken Bildhälfte gezeigten Kondensator 11 einer Ladungspumpe angelegt.

Die Ladungspumpe mit dem in Fig. 4 in der linken Bildhälfte gezeigten Kondensator 11 und Stromrichteinheit 12 koppelt die entstandene negative Überwachungsspannung gegen +5 Volt an dem weiteren Spannungseingang 23 aus. Diese Überwachungsspannung muss negativer als 0 Volt sein, die am Spannungseingangsgegenpol 22 vorgesehen sind (der einen GND-Anschluss bildet). Diese Überwachungsspannung ist somit eine Betriebsspannung für den Auskopplungsschalter 1 S.

### Lebenszeichen eines zweiten Microcontrollers

Ein (hier nicht gezeigter) zweiter Microcontroller liefert ein Lebenszeichen und somit in einem Takt einen Signalpegel H an den in Fig. 4 rechts gezeigten Signaleingang 1A und schaltet damit den in Fig. 4 rechts gezeigten Transistorschalter S3 ein. Dadurch werden 12 Volt an den in Fig. 4 in der linken Bildhälfte gezeigten Kondensator 11 einer Ladungspumpe von dem Spannungseingang 21 angelegt.

Im nächsten Takt des Lebenszeichens liefert der erste Microcontroller einen Signalpegel H an den in Fig. 4 rechts gezeigten Signaleingang 1 B und schaltet damit den rechts in Fig. 4 gezeigten Transistorschalter S1 ein. Dadurch werden 0 Volt an den in Fig. 4 in der linken Bildhälfte gezeigten Kondensator 11 einer Ladungspumpe angelegt.

Die Ladungspumpe mit dem in Fig. 4 in der linken Bildhälfte gezeigten Kondensator 11 und Stromrichteinheit 12 koppelt die entstandene negative Überwachungsspannung gegen +5 Volt an dem weiteren Spannungseingang 23 aus. Diese Überwachungsspannung muss negativer als 0 Volt sein, die am Spannungseingangsgegenpol 22 vorgesehen sind (der einen GND-Anschluss bildet). Diese Überwachungsspannung ist somit eine Betriebsspannung für den Auskopplungsschalter 1S.

### Taktsignalgeneratoreinheit-Wechselwirkung mit den Signalverarbeitungseinheiten

Die Auskopplungsschalter 1S arbeiten dynamisch mit dem Takt des Schmitt-Triggers bzw. Taktsignalgeneratoreinheit 4. Über den Taktsignalschalter 3S wird das Ausgabetaktsignal für Statusmeldungen bereitgestellt. Jeder Fehler (Unterbrechung oder Kurzschluss) führt somit in der gewünschten Weise zum Ausbleiben des Ausgabetaktsignals für alle Statusmeldungen.

### BEZUGSZEICHENLISTE

- 1: Signalverarbeitungseinheit
- 11: Kondensator einer Ladungspumpe
- 12: Stromrichteinheit der Ladungspumpe
- 13: Umschalteinrichtung
- 14: Glättungskondensator
- 1A, 1B: Signaleingänge
- 1S: Auskopplungsschalter
- 21: Spannungseingangspol
- 22: Spannungseingangsgegenpol
- 23: weiterer Spannungseingangspol
- 3: Taktsignalausgabeeinheit
- 3A: Taktsignalausgang
- 3S: Taktsignalschalter
- 4: Taktgeneratoreinheit
- 41: Schmitt-Trigger
- C: Kopplungskondensator
- R: Widerstand
- S1, S2, S3: Transistorschalter

## Patentansprüche

1. Taktsignalausgabeeinrichtung zur Ausgabe eines Ausgabetaktsignals in Abhängigkeit von einem Empfangstaktsignal und in Abhängigkeit von wenigstens zwei mit Gegentakt zueinander empfangenen Eingangssignalen, umfassend:
- eine Signalverarbeitungseinheit (1), die eine Ladungspumpe, welche eine Stromrichteinheit (12) aufweist und einen elektronischen Auskopplungsschalter (1S) mit einer Basis zum Empfang des Empfangstaktsignals umfasst, und
- eine Taktsignalausgabeeinheit (3) mit einem Taktsignalausgang (3A),
- wobei die Signalverarbeitungseinheit (1) ferner einen Kondensator (11) und eine Umschalteinrichtung (13) mit zwei Signaleingängen (1A, 1 B) für die Eingangssignale umfasst, die eingerichtet ist, um den Kondensator (11) zwischen die Stromrichteinheit (12) und, in Abhängigkeit der Eingangssignale, entweder einen Spannungseingangspol (21) oder einen Spannungseingangsgegenpol (22) zu schalten,
**dadurch gekennzeichnet, dass**
- in der Taktsignalausgabeeinheit zur Unterbrechung einer Verbindung von dem Spannungseingangspol (21) und von dem Taktsignalausgang (3A) zu dem Spannungseingangsgegenpol (22) ein elektronischer Taktsignalschalter (3S) eingerichtet und mit seiner Basis an die Stromrichteinheit (12) und an den Auskopplungsschalter (1S) gekoppelt ist,
wobei
- die Stromrichteinheit (12) zwischen einen weiteren Spannungseingangspol (23) und den Auskopplungsschalter (1S) geschaltet ist, um mit dem Kondensator (11) eine Überwachungsspannung zwischen der Stromrichteinheit (12) und dem Spannungseingangsgegenpol (22) aufzubauen,
- die Überwachungsspannung ein Vorzeichen hat, das dem Vorzeichen einer zwischen dem Spannungseingangspol (21) bzw. dem weiteren Spannungseingangspol (23) und dem Spannungseingangsgegenpol (22) vorgesehenen Spannung entgegengesetzt ist, und
- an dem Spannungseingangspol (21) ein höherer absoluter Spannungswert als an dem weiteren Spannungseingangspol (23) vorgesehen ist.

2. Taktsignalausgabeeinrichtung nach Anspruch 1, wobei ein Kopplungskondensator (C) zwischen dem Auskopplungsschalter (1S) und der Basis des Taktsignalschalters (3S) vorgesehen ist, wobei eine Funktion des Auskopplungsschalters (1S) zum Anschluss des Kopplungskondensators (C) an den Spannungseingangsgegenpol (22) eingerichtet ist.

3. Taktsignalausgabeeinrichtung nach Anspruch 2, wobei eine Diode (D) zwischen dem Spannungseingangsgegenpol (22) und der Basis des Taktsignalschalters (3S) vorgesehen ist.

4. Taktsignalausgabeeinrichtung nach einem der vorhergehenden Ansprüche, wobei die Umschalteinrichtung (13) umfasst:
- einen ersten Transistorschalter (S1), der als Schalter zwischen den Spannungseingangsgegenpol (22) und den Kondensator (11) der Ladungspumpe geschaltet ist und dessen Gatter Verbindungen zu einem der Signaleingänge (1B) und zu dem Spannungseingangsgegenpol (22) aufweist,
- einen zweiten Transistorschalter (S2), der als Schalter zwischen den Spannungseingangspol (21) und den Kondensator (11) der Ladungspumpe geschaltet ist und dessen Gatter eine Verbindung zu dem Spannungseingangspol (21) aufweist, und
- einen dritten Transistorschalter (S3), der als Schalter zwischen den Spannungseingangsgegenpol (22) und das Gatter des zweiten Transistorschalters (S2) geschaltet ist und dessen Gatter Verbindungen zu einem weiteren der Signaleingänge (3A) und zu dem Spannungseingangsgegenpol (22) aufweist.

5. Taktsignalausgabeeinrichtung nach einem der vorhergehenden Ansprüche, wobei in der Signalverarbeitungseinheit (1) ein zwischen Emitter und Kollektor des Auskopplungsschalters (1S) geschalteter Glättungskondensator (14) vorgesehen ist.

6. Taktsignalausgabeeinrichtung nach einem der Ansprüche 2 bis 5, wobei
- die Signalverarbeitungseinheit (1) doppelt vorgesehen ist,
- der Kopplungskondensator (C) an dem Auskopplungsschalter (1 S) von einer ersten der Signalverarbeitungseinheiten vorgesehen ist und
- ein weiterer Kopplungskondensator (C) vorgesehen ist, der mit einem Ende über den Auskopplungsschalter (1 S) von einer zweiten der
Signalverarbeitungseinheiten an den Spannungseingangsgegenpol (22) anschließbar und mit einem weiteren Ende an die Basis des Auskopplungsschalters (1 S) der ersten Signalverarbeitungseinheit angeschlossen ist.

7. Schaltung mit einer Taktsignalausgabeeinrichtung nach einem der Ansprüche 1 bis 5 und mit einer Taktgeneratoreinheit (4) zur Erzeugung des Empfangstaktsignals, die zur Abgabe des Empfangstaktsignals an die Basis des Auskopplungsschalters (1 S) mit der Signalverarbeitungseinheit (1) verbunden ist.

8. Schaltung mit einer Taktsignalausgabeeinrichtung nach Anspruch 6 und mit einer Taktgeneratoreinheit (4) zur Erzeugung des Empfangstaktsignals, die zur Abgabe des Empfangstaktsignals an die Basis des Auskopplungsschalters (1S) mit der zweiten Signalverarbeitungseinheit (1) verbunden ist.

9. Schaltung nach Anspruch 7 oder 8, wobei die Taktgeneratoreinheit (4) ferner zur Abgabe von einem zu dem Empfangstaktsignal invers getakteten Signals an den Spannungseingangsgegenpol (22) eingerichtet und geschaltet ist.

10. Schaltung nach Anspruch 9, wobei die Taktgeneratoreinheit (4) einen zur Abgabe von dem Empfangstaktsignal und dem zu dem Empfangstaktsignal invers getakteten Signal geschalteten Oszillator, insbesondere einen Schmitt-Trigger (41), zwischen zwei Oszillator-Kopplungskondensatoren (C) aufweist.

11. Steuereinheit, insbesondere für Lichtsignalgeber, umfassend eine Schaltung nach einem der Ansprüche 7 bis 10, wenigstens einen Microcontroller und eine Statusmeldungseinheit, wobei
- von der Signalverarbeitungseinheit bzw. den Signalverarbeitungseinheiten (1) die Signaleingänge (1A, 1 B) an den wenigstens einen Microcontroller angeschlossen sind und
- die Statusmeldungseinheit an den Taktsignalausgang (3A) angeschlossen ist und eine Funktion zur Ausgabe von Meldungen über einen Microcontrollerstatus mittels des Ausgabetaktsignals aufweist.

12. Lichtsignalgeber, insbesondere für Bahnübergänge, umfassend eine Steuereinheit nach Anspruch 11.

## Claims

1. A clock signal output device for outputting an output clock signal depending on a receive clock signal and depending on at least two input signals received in pushpull-manner with respect to one another, comprising:
- a signal processing unit (1), which comprises a charge pump comprising a rectifier unit (12) and including an electronic decoupling switch (1S) with a base for receiving the receive clock signal, and
- a clock signal output unit (3) with a clock signal output (3A),
- wherein the signal processing unit (1) further comprises a capacitor (11) and a switch-over device (13) with two signal inputs (1A, 1 B) for the input signals, which is designed to switch the capacitor (11) between the rectifier unit (12) and, depending on the input signals, either a voltage input pole (21) or a voltage input anti-pole (22),
**characterised in that**
- an electronic clock signal switch (3S) is provided in the clock signal output unit for interrupting a connection from the voltage input pole (21) and from the clock signal output (3A) to the voltage input anti-pole (22) and is coupled with its base to the rectifier unit (12) and to the decoupling switch (1S),
wherein
- the rectifier unit (12) is switched between a further voltage input pole (23) and the decoupling switch (1S), in order to generate with the capacitor (11) a monitoring voltage between the rectifier unit (12) and the voltage input anti-pole (22),
- the monitoring voltage has a sign which is opposite to the sign of a voltage provided between the voltage input pole (21) or the further voltage input pole (23) and the voltage input anti-pole (22), and
- a higher absolute voltage value than at the further voltage input pole (23) is provided at the voltage input pole (21).

2. The clock signal output device according to claim 1, wherein a coupling capacitor (C) is provided between the decoupling switch (1 S) and the base of the clock signal switch (3S), wherein a function of the decoupling switch (1 S) is provided for connecting the coupling capacitor (C) to the voltage input anti-pole (22).

3. The clock signal output device according to claim 2, wherein a diode (D) is provided between the voltage input anti-pole (22) and the base of the clock signal switch (3S).

4. The clock signal output device according to any one of the preceding claims, wherein the switch-over device (13) comprises:
- a first transistor switch (S1), which as a switch is switched between the voltage input anti-pole (22) and the capacitor (11) of the charge pump and the gate whereof comprises connections to one of the signal inputs (1B) and to the voltage input anti-pole (22),
- a second transistor switch (S2), which as a switch is switched between the voltage input pole (21) and the capacitor (11) of the charge pump and the gate whereof comprises a connection to the voltage input pole (21),
- a third transistor switch (S3), which as a switch is switched between the voltage input anti-pole (22) and the gate of the second transistor switch (S2) and the gate whereof comprises connections to a further one of the signal inputs (3A) and to the voltage input anti-pole (22).

5. The clock signal output device according to any one of the preceding claims, wherein a smoothing capacitor (14) switched between the emitter and collector of the decoupling switch (1 S) is provided in the signal processing unit (1).

6. The clock signal output device according to any one of claims 2 to 5, wherein
- the signal processing unit (1) is provided in duplicate,
- the coupling capacitor (C) is provided on the decoupling switch (1 S) from a first of the signal processing units and
- a further coupling capacitor (C) is provided, which can be connected with one end, via the decoupling switch (1 S) from a second of the signal processing units, to the voltage input anti-pole (22) and, with another end, is connected to the base of the decoupling switch (1 S) of the first signal processing unit.

7. A circuit with a clock signal output device according to any one of claims 1 to 5 and with a clock generator unit (4) for generating the receive clock signal, which clock generator unit is connected, for the delivery of the receive clock signal to the base of the decoupling switch (1S), to the signal processing unit (1).

8. The circuit with a clock signal output device according to claim 6 and with a clock generator unit (4) for generating the receive clock signal, which clock generator unit is connected, for the delivery of the receive clock signal to the base of the decoupling switch (1S), to the second signal processing unit (1).

9. The circuit according to claim 7 or 8, wherein the clock generator unit (4) is further designed and switched, for the delivery of a signal inversely clocked to the receive signal, to the voltage input anti-pole (22).

10. The circuit according to claim 9, wherein the clock generator unit (4) comprises an oscillator switched for the delivery of the receive clock signal and the signal inversely clocked to the receive clock signal, in particular a Schmitt trigger (41), between two oscillator coupling capacitors (C).

11. A control unit, in particular for a light signal emitter, comprising a circuit according to any one of claims 7 to 10, at least one microcontroller and a status message unit, wherein
- the signal inputs (1A, 1 B) from the signal processing unit or the signal processing units (1) are connected to the at least one microcontroller and
- the status message unit is connected to the clock signal output (3A) and has a function for delivering messages concerning a microcontroller status by means of the output clock signal.

12. A light signal emitter, in particular for level crossings, comprising a control unit according to claim 11.

## Revendications

1. Dispositif émetteur de signal d'horloge destiné à émettre un signal d'horloge d'émission en fonction d'un signal d'horloge de réception et en fonction d'au moins deux signaux d'entrée reçus en opposition de phase l'un par rapport à l'autre, comprenant:
- une unité de traitement de signaux (1), qui comprend une pompe de charge avec une unité de conversion de puissance (12) et avec un commutateur de découplage (1 S) électronique ayant une base pour recevoir le signal d'horloge de réception, et
- une unité émettrice de signal d'horloge (3) ayant une sortie de signal d'horloge (3A),
- dans lequel ladite unité de traitement de signaux (1) en outre comprend un condensateur (11) et un dispositif de commutation (13) ayant deux entrées de signal (1A, 1 B) pour les signaux d'entrée qui est agencé pour monter le condensateur (11) entre l'unité de conversion de puissance (12) et, en fonction des signaux d'entrée, soit un pôle d'entrée de tension (21) soit un pôle opposé d'entrée de tension (22),
**caractérisé en ce que**,
- pour couper une connexion du pôle d'entrée de tension (21) et de la sortie de signal d'horloge (3A) au pôle opposé d'entrée de tension (22), un commutateur de signal d'horloge (3S) électronique est agencé dans ladite unité émettrice de signal d'horloge et est couplé par sa base à l'unité de conversion de puissance (12) et au commutateur de découplage (1 S), dans lequel
- ladite unité de conversion de puissance (12) est montée entre un autre pôle d'entrée de tension (23) et le commutateur de découplage (1 S) afin d'établir avec le condensateur (11) une tension de surveillance entre l'unité de conversion de puissance (12) et le pôle opposé d'entrée de tension (22),
- la tension de surveillance a un signe qui est opposé au signe d'une tension qui est prévue entre le pôle d'entrée de tension (21) ou bien ledit autre pôle d'entrée de tension (23) et le pôle opposé d'entrée de tension (22), et
- sur le pôle d'entrée de tension (21) est prévue une valeur de tension absolue plus élevée que sur ledit autre pôle d'entrée de tension (23).

2. Dispositif émetteur de signal d'horloge selon la revendication 1, dans lequel un condensateur de couplage (C) est prévu entre le commutateur de découplage (1S) et la base du commutateur de signal d'horloge (3S), dans lequel une fonction du commutateur de découplage (1S) pour le raccordement du condensateur de couplage (C) au pôle opposé d'entrée de tension (22) est établie.

3. Dispositif émetteur de signal d'horloge selon la revendication 2, dans lequel une diode (D) est prévue entre le pôle opposé d'entrée de tension (22) et la base du commutateur de signal d'horloge (3S).

4. Dispositif émetteur de signal d'horloge selon l'une quelconque des revendications précédentes, dans lequel le dispositif de commutation (13) comprend :
- un premier interrupteur transistor (S1) qui est monté en tant qu'interrupteur entre le pôle opposé d'entrée de tension (22) et le condensateur (11) de la pompe de charge et dont la grille présente des connexions à l'une des entrées de signal (1B) et au pôle opposé d'entrée de tension (22),
- un deuxième interrupteur transistor (S2) qui est monté en tant qu'interrupteur entre le pôle d'entrée de tension (21) et le condensateur (11) de la pompe de charge et dont la grille présente une connexion au pôle d'entrée de tension (21), et
- un troisième interrupteur transistor (S3) qui est monté en tant qu'interrupteur entre le pôle opposé d'entrée de tension (22) et la grille du deuxième interrupteur transistor (S2) et dont la grille présente des connexions à une autre des entrées de signal (3A) et au pôle opposé d'entrée de tension (22).

5. Dispositif émetteur de signal d'horloge selon l'une quelconque des revendications précédentes, dans lequel un condensateur de filtrage (14) monté entre l'émetteur et le colleteur du commutateur de découplage (15) est prévu dans ladite unité de traitement de signaux (1).

6. Dispositif émetteur de signal d'horloge selon l'une quelconque des revendications 2 à 5, dans lequel
- ladite unité de traitement de signaux (1) est prévue en double,
- le condensateur de couplage (C) est prévu sur le commutateur de découplage (1 S) d'une première des unités de traitement de signaux et
- un autre condensateur de couplage (C) est prévu qui peut être raccordé par une extrémité, par l'intermédiaire du commutateur de découplage (1S) d'une deuxième des unités de traitement de signaux, au pôle opposé d'entrée de tension (22) et qui est raccordé par une autre extrémité à la base du commutateur de découplage (1 S) de la première unité de traitement de signaux.

7. Circuit comprenant un dispositif émetteur de signal d'horloge selon l'une quelconque des revendications 1 à 5 et une unité de génération d'horloge (4) destinée à générer le signal d'horloge de réception qui, pour émettre le signal d'horloge de réception à la base du commutateur de découplage (1 S), est reliée à l'unité de traitement de signaux (1).

8. Circuit comprenant un dispositif émetteur de signal d'horloge selon la revendication 6 et une unité de génération d'horloge (4) destinée à générer le signal d'horloge de réception qui, pour émettre le signal d'horloge de réception à la base du commutateur de découplage (1S), est reliée à la deuxième unité de traitement de signaux (1).

9. Circuit selon la revendication 7 ou 8, dans lequel ladite unité de génération d'horloge (4) est agencée et montée en outre pour émettre au pôle opposé d'entrée de tension (22) un signal cadencé inversement par rapport au signal d'horloge de réception.

10. Circuit selon la revendication 9, dans lequel ladite unité de génération d'horloge (4) présente un oscillateur monté pour émettre le signal d'horloge de réception et le signal cadencé inversement par rapport au signal d'horloge de réception, en particulier une bascule de Schmitt (41), entre deux condensateurs de couplage d'oscillateur (C).

11. Unité de commande, en particulier pour émetteurs de signaux lumineux, comprenant un circuit selon l'une quelconque des revendications 7 à 10, au moins un microcontrôleur et une unité de message d'état, dans laquelle
- les entrées de signal (1A, 1 B) de l'unité de traitement de signaux ou bien des unités de traitement de signaux (1) sont connectées audit au moins un microcontrôleur, et
- ladite unité de message d'état est connectée à la sortie de signal d'horloge (3A) et présente une fonction d'émission de messages relatifs à un état de microcontrôleur au moyen du signal d'horloge d'émission.

12. Emetteur de signaux lumineux, en particulier pour passages à niveau, comprenant une unité de commande selon la revendication 11.
